# EUROPÄISCHE PATENTSCHRIFT

(11) **EP 0 560 376 B1**
(45) Veröffentlichungstag und Bekanntmachung des Hinweises auf die Patenterteilung: **18.06.1997**
(21) Anmeldenummer: 93104034.9
(22) Anmeldetag: 12.03.1993
(51) Int. Cl.: A41D 13/12, B32B 5/26

(54) **Bekleidungsstück**
Article of clothing
Pièce d'habillement

(30) Priorität: 12.03.1992 DE 4207931; 19.10.1992 DE 4235168
(43) Veröffentlichungstag der Anmeldung: 15.09.1993
(73) Patentinhaber: ROTECNO AG, CH-8045 Zürich (CH)
(72) Erfinder: Duncan, John A., Glenrothes, Scotland KY6 2QB (GB); Patel, Suresh R., Dr., Dalgety Bay, Scotland KY11 5YL (GB); Wiedner, Günther, Dr., D-82402 Seeshaupt (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 164 739
- DE-U- 9 109 638
- US-A- 3 868 728
- US-A- 4 504 977
- US-A- 5 027 438

## Beschreibung

Die Erfindung betrifft ein Bekleidungsstück, insbesondere für den medizinischen oder chemischen Bereich, zum Schutz vor Flüssigkeiten und/oder Mikroorganismen, welches zumindest teilweise aus inneren und äußeren Lagen besteht.

Bekleidungsstücke, die aus wenigstens drei Lagen bestehen sind bekannt, beispielsweise aus dem Bereich des Sports. Obwohl solche Bekleidungsstücke durchaus für die vorgesehenen Anwendungen geeignet sind und beispielsweise gegen Regen und Wind einen Schutz bieten, dennoch aber atmungsaktiv sind, so daß der geforderte Tragkomfort erreicht ist, sind sie nicht für einige wichtige konkrete Anwendungen im medizinischen und chemischen Bereich ohne weiteres einsetzbar, z.B. wegen der eingeschränkten Sterilisierungsfähigkeit. Ein Beispiel eines Bekleidungsstückes der eingangs genannten Art als Bekleidung für einen Chirurg und mit drei Lagen ist aus der US-A-5,027,438 bekannt.

Die US-A-4,504,977 beschreibt im Zusammenhang mit dem Stand der Technik die Verwendung von wasserabweisenden und wasserundurchlässigen Barrieren im Zusammenhang mit Geweben von Bekleidungsstücken, insbesondere von chirurgischen Kitteln, um den Durchtritt von Wasser oder wässrigen Lösungen zu verhindern. Es wird dann dort die Aufgabe aufgestellt, einen wegwerfbaren chirurgischen Kittel vorzusehen, welcher ausgezeichneten Schutz gegen Kontamination für den Träger und den Patienten schafft und gleichzeitig einen ausgezeichneten Tragecomfort für den Träger schafft. Zur Lösung dieser Aufgabe wird nach der dort beschriebenen Erfindung ein Kittel verwendet mit einer Schicht eines wasserabweisenden, luftporösen, nicht gewobenen Stoffes, der aus mikrofeinen hydrophobischen Fasern besteht.

Von solchen Bekleidungsstücken, welche vorzugsweise von Personen getragen werden, die im medizinischen oder im chemischen Bereich tätig sind, ist gefordert, daß sie einerseits einen hohen Tragekomfort auch über längere Zeiträume bieten und andererseits eine sichere Barriere für Substanzen, beispielsweise Flüssigkeiten, und Mikroorganismen, insbesondere Bakterien, bilden.

Bei diesen Bekleidungsstücken kommt es vor, daß an besonders beanspruchten Stellen, den kritischen Stellen, welche intensiv und unter fortwährendem Druck mit Substanzen, beispielsweise mit dem Blut von Patienten, in Kontakt kommen, diese Substanzen durch das Bekleidungsstück hindurchtreten.

Aufgabe der Erfindung ist es, ein vorzugsweise im medizinischen oder chemischen Bereich benützbares Bekleidungsstück der eingangs genannten Gattung zu schaffen, welches den Durchtritt von Substanzen, insbesondere Flüssigkeiten, beispielsweise Blut, und Mikroorganismen, insbesondere Bakterien durch das Bekleidungsstück, über einen ausreichend großen Zeitraum wirkungsvoll verhindert, ohne daß das Bekleidungsstück dabei jedoch unkomfortabel zu tragen ist, und ohne daß die Bewegungsfreiheit des Trägers eingeschränkt wird. Als Bekleidungsstück im Sinne der Erfindung werden nicht nur Kittel und Overalls sondern auch Schuhe, Gamaschen, Kappen und dergleichen angesehen.

Das Bekleidungsstück ist dadurch gekennzeichnet, daß die äußere Lage aus einem eine Flüssigkeits- und eine Mikroorganismenbarriere bildenden dichtgewebten hydrophoben Gewebe gebildet ist, daß die innere Lage wenigstens ein Trägermaterial mit einer netzartigen, mit Öffnungen oder offene Maschen versehenen Struktur umfaßt, die an zumindest einer Stelle an die äußere Lage befestigt oder befestigbar ist, an der die Gefahr eines Durchtritts von Flüssigkeiten und/oder Mikroorganismen geringer ist, insbesondere an Seiten- oder Rückennähten oder an Schulter- und Manschettennähten eines Kittels, und daß zumindest eine Membran am Trägermaterial an wenigstens einer kritischen Stelle befestigt ist, an der die Gefahr eines Durchtritts der Flüssigkeit- und/oder Mikroorganismuses durch die äußere Lage auftritt.

In dieser Ausführungsform ist somit ein Minimum von zwei Lagen vorhanden. Das Trägermaterial oder -gewebe hat in dieser Lösung eine Mehrfachfunktion. Einerseits dient das Trägermaterial wie auch vorhergehend beschrieben dazu, die Membran so anzuordnen, daß diese die kritischen Stellen, beispielsweise eines Operationskittels bedeckt. Solche kritische Stellen umfassen typischerweise die Brust- und Bauchbereiche und die Arme. Gleichzeitig gestattet das Trägermaterial durch seine netzartige, mit Öffnungen oder offenen Maschen versehene Struktur einen relativ freien Luftstrom innerhalb dem Raum zwischen der äußeren Lage und der Membran sowie in und aus diesem Raum und verbessert somit den Tragekomfort des Kittels für den Arzt oder Träger. dabei wird insbesondere beabsichtigt, daß die Bewegungen, die unvermeidbar während des Gebrauchs des Kittels durch die Tätigkeit des Trägers auftreten, eine pumpenartige Wirkung zwischen den zwei sich relativ zueinander bewegenden Lagen erzeugt, wobei zumindest eine Bewegung aufeinander zu und voneinander weg auftritt, so daß diese Pumpwirkung selbst einen Luftstrom zwischen der äußeren Lage und der Membran und auf und um den Körper des Trägers herbeiführen wird, wodurch sich der Tragkomfort ebenfalls verbessert.

Die Öffnungen im Trägermaterial haben auch den bestimmten Vorteil, daß sie die Reinigung und die Sterilisation des Kleidungsstücks wesentlich erleichtern, da das Reinigungs- oder Sterilisationsfluid, beispielsweise Dampf, dann einen leichten Zutritt zum Inneren der äußeren Lage und zur Oberfläche der dieser gegenüberliegenden Membran aufweist.

Das Trägermaterial wird vorzugsweise aus einer elastisch dehnbaren oder flexiblen Lage hergestellt, so daß die allgemeine Steifheit des Kittels reduziert wird und der Kittel somit einen noch mehr verbesserten Tragkomfort aufweist.

Einige verschiedene Realisationsmöglichkeiten dieses Basiskonzepts der Erfindung sind möglich.

Insbesondere kann das Trägermaterial sich hinter der Membran an der von der äußeren Lage abgewandten Seite erstrecken und zusammen mit dieser Membran ein Laminat bilden. In diesem Fall kann die Membran an ihren Kanten an die Trägerschicht angenäht sein oder zu dieser an ihren Kanten oder über ihren ganzen Bereich oder nur an bestimmten Bereichen zu dieser klebebefestigt werden. Alternativ kann das Trägermaterial mit einer Öffnung an der Position versehen sein, an der die Membran angeordnet wird, wobei diese am Trägermaterial beispielsweise an ihren Randkanten um die Öffnung befestigt wird. Diese Verbindung kann durch Nähen ohne irgendeine besondere Vorsichtsmaßnahme durchgeführt werden, da das mit Öffnungen versehene Trägermaterial in keinster Weise eine Barriere für kontaminierte Flüssigkeiten und Fluide darstellt. Natürlich soll die Membran ausreichend groß gewählt und so angeordnet werden, daß sie sich in allen Richtungen über die Stelle erstreckt, an der ein direkter Durchtritt der Flüssigkeit und/oder des Mikroorganismuses durch die äußere Lage befürchtet werden muß.

Wie vorgenannt angemerkt kann die Membran beispielsweise in den Brust- und Bauchbereichen des Kittels angeordnet werden, wobei es geeigneterweise ein im wesentlichen ebenes, blattförmiges Material umfaßt. Alternativ oder zusätzlich können solche Membrane in einen oder beiden Armen eines Kittels vorgesehen sein. In diesem Fall weist die oder jede Membran eine rohrförmige Struktur auf und wird typischerweise durch das Trägermaterial bei wenigstens einem der Manschetten- oder Schulterbereiche des Ärmels am Kittel befestigt. Die Verwendung eines hochgradig luftdurchlässigen Trägermaterials im Schulterbereich garantiert eine gute Durchlüftung der Achselhöhlen, wodurch wiederum der Tragekomfort des Kittels verbessert wird. Ein ähnlich vorteilhafter Effekt wird am Handgelenk des Manschettenbereichs erreicht. Obwohl es sein kann, daß die Verwendung eines Trägermaterials, welches natürlicherweise nicht nur für Luft sondern auch für Wasser durchlässig ist, an den Manschettenbereichen unerwünscht ist, sollte angemerkt werden, daß der Manschettenbereich bei der Benutzung durch Handschuhe abgedeckt wird, so daß in diesem Bereich bereits ein zusätzlicher Schutz gegen das Eindringen von kontaminierter Flüssigkeit vorhanden ist. Somit kann die Benutzung eines luftdurchlässigen Trägermaterials in diesem Bereich realistisch in Betracht gezogen werden. Falls konkrete Bedenken in diesem Bereich existieren, kann die Verwendung des Trägermaterials auf den Schulterbereich beschränkt werden. In der Tat ist es vorstellbar, daß die Membran des Ärmeleinsatzes nur an einem Ende des Kittels befestigt wird, vorzugsweise an dem schulterseitigen Ende, um das Anziehen des Kittels zu erleichtern.

Die oder jede Membran kann permanent oder auswechselbar im Bekleidungsstück angeordnet sein. Dies kann entweder durch lösbare Befestigungsmittel, die die Membran mit dem Trägermaterial verbinden oder durch lösbare Befestigungsmittel, die das Trägermaterial mit der äußeren Schicht verbinden, erreicht werden. Dabei können alle herkömmlichen Verbindungsvorrichtungen in Betracht gezogen werden, beispielsweise eine "Velcro"-artige Befestigung (tm), eine Druckknopfbefestigung oder ein Reißverschluß.

Die Verwendung von entfernbaren Membranen oder entfernbaren inneren Lagen hat den Vorteil, daß bei einige Arten von Operationen, bei denen kontaminierte Flüssigkeiten oder übermäßige Mengen von Flüssigkeiten oder Körperflüssigkeiten nicht erwartet werden, auf die innere Lage insgesamt verzichtet werden kann, so daß der Träger einen insgesamt leichteren und komfortableren Kittel besitzt. Desweiteren kann die Sterilisation des Kittels auf diese Art weiter verbessert werden. Zusätzlich braucht nur eine beschränkte Auswahl von Größen von Membranen gefertigt werden, die mit einer größeren Auswahl von Kittelgrößen verwendet wird, welche als äußeres Schichtmaterial benützt wird. Dies kann die Speicherungs- und Aufbewahrungsmöglichkeiten vereinfachen. Weiter kann bei Beschädigung entweder der äußeren Lage oder der inneren Lage diese ersetzt werden, ohne daß der gesamte Kittel ersetzt werden muß. Auch auf diese Weise wird die Aufbewahrung vereinfacht.

Die Membran kann auf verschiedene Arten realisiert werden. Beispielsweise kann sie ein flüssigkeitsundurchlässiges aber wasserdampfdurchlässiges Material, beispielsweise eine Folie oder Textilmaterial umfassen, oder sie kann ein Material umfassen, daß sowohl für Wasser als auch für Wasserdampf undurchlässig ist. Es ist auch möglich, die Membran als zusammengesetzte Membran zu realisieren, die wenigstens erste und zweite Lagen umfaßt, wobei die erste Lage benachbart der äußeren Lage und die zweite Lage an einer von der äußeren Lage abgewandten Fläche der ersten Lage angeordnet ist. Für diesen Fall können die ersten und zweiten Lagen die folgenden Materialpaare umfassen:
a) eine flüssigkeits- und wasserdampfundurchlässige Folie als erste Lage und ein mit offenen Maschen gewobenes oder nicht gewobenes Gewebe als zweite Lage, wobei eine absorbierende Lage wahlweise an zumindest einer Fläche der ersten Lage vorgesehen ist,
b) eine flüssigkeitsundurchlässige aber wasserdampfdurchlässige folienartige Membran als erste Lage und ein mit offenen Maschen gewebtes oder nicht gewebtes Gewebe als zweite Lage, wobei wieder eine absorbierende Lage wahlweise auf zumindest einer Fläche der ersten Lage vorgesehen ist.

Die vorteilhaften Ausführungen sind in den Unteransprüchen definiert.

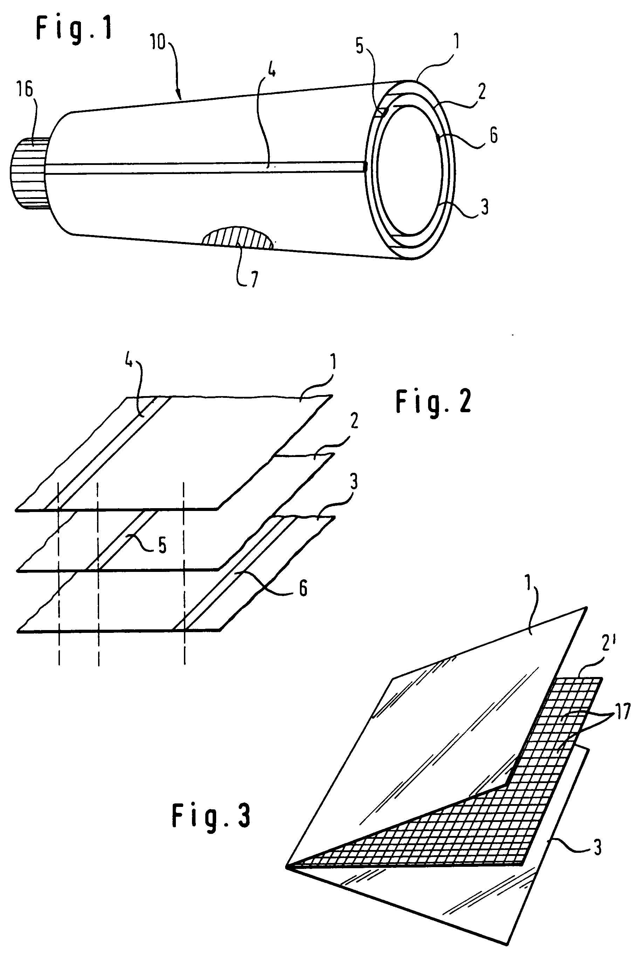

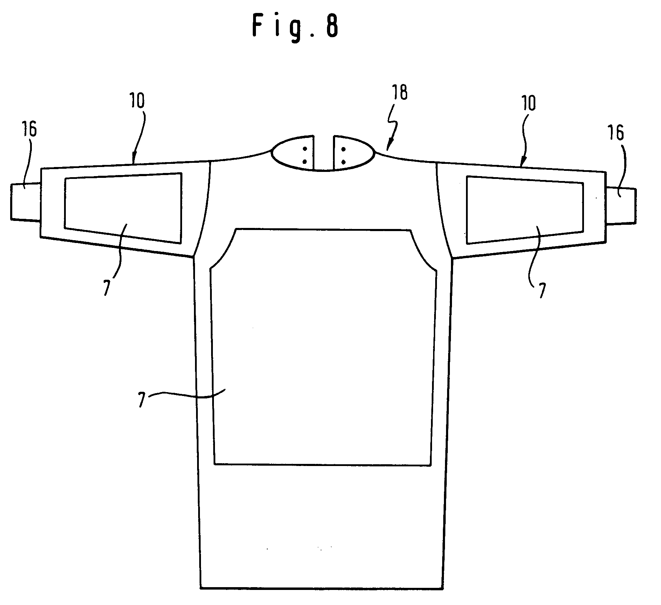

Die Erfindung wird nachfolgend anhand der Figuren 8 bis 15 der Zeichnungen beispielsweise näher erläutert, wobei sich die Figuren 1 bis 7 mit einer alternativen, hier nicht beanspruchten Lösung befassen, wobei die Beschreibung dieser Figuren 1 bis 7 beibehalten wird, da die verwendeten Stoffe teilweise bei den Ausführungsformen der Erfindung gemäß Figuren 8 bis 15 verwendet werden. In den Zeichnungen zeigen:
- Fig. 1: ein Schnittbild eines Ärmels eines Bekleidungsstücks,
- Fig. 2: einen Teilausschnitt einer Explosionszeichnung von drei übereinander angeordneten Lagen mit Nähten,
- Fig. 3: den schematischen Aufbau des Bekleidungsstücks mit einer netzartigen Zwischenlage,
- Fig. 4: den schematischen Aufbau des Bekleidungsstücks mit einer saugfähigen Zwischenlage,
- Fig. 5: den schematischen Aufbau des Bekleidungsstücks mit einer netzartigen Zwischenlage und einer zusätzlichen impermeablen Materialanordnung
- Fig. 6: ein schematisches Schnittbild einer Naht
- Fig. 7: ein schematisches Schnittbild einer weiteren Naht,
- Fig. 8: eine schematische Darstellung eines Chirurgenkittels nach der Erfindung,
- Fig. 9: eine teilweise weggebrochene Frontansicht eines Operationskittels gemäß der Erfindung,
- Fig. 10: eine Querschnittsansicht des Kittels nach Fig. 9 gemäß der Ebene X - X der Fig. 9,
- Fig. 11: eine Teilansicht ähnlich wie Fig. 10, aber mit einer alternativen Verbindung zwischen einem Trägermaterial und einer Membran,
- Fig. 12: eine Teilansicht zu der nach Fig. 10, aber mit der äußeren Schicht weggebrochen, wobei eine alternative Verbindung zwischen einem Trägermaterial und der äußeren Lage gezeigt wird, und
- Fig. 13, 14 und 15: ähnliche Ansichten zu der von Fig. 11, mit alternativen Ausführungsformen.

Die Anwendung der Erfindung ist nicht beschränkt auf die nachfolgend angeführten beispielsweisen Ausführungsformen gemäß Fig. 8 bis 15.

In Fig. 1 ist ein ärmelartiges Teil 10 eines Bekleidungsstückes dargestellt, welches aus einer äußeren Lage 1, einer Zwischenlage 2 und einer inneren Lage 3 aufgebaut ist.

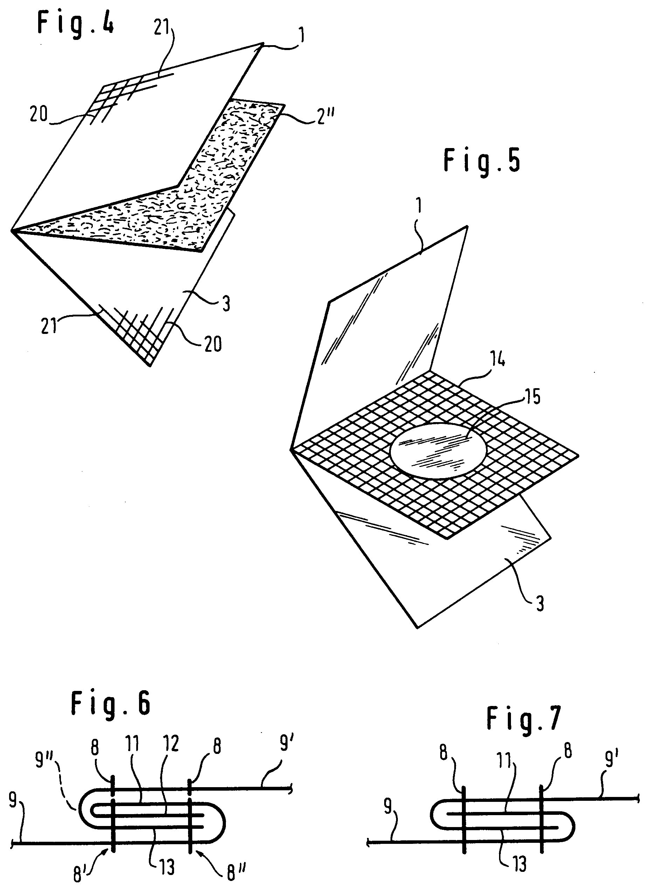

Die äußere Lage 1 besteht in diesem Beispiel aus einer Konstruktion von Mikrofasern (Mikrofasern sind Fasern unter 1 dTex), die mehr als 12.000 Einzelfilamente/cm² aufweisen. Beispielsweise sind in einer Richtung (Kett oder Schußrichtung) 60 Fäden/cm mit je 144 Einzelfilamenten vorgesehen. Die Filamente können beispielsweise aus Polyester bestehen und sind mit der herkömmlichen Textiltechnologie hydrophob ausgerüstet. Um eine elektrostatische Aufladung zu verhindern, sind in kurzen Abständen, beispielsweise 5 mm, durchgehende, leitfähige Fäden 20, 21 vorzugsweise in der äußeren 1 und der inneren Lage 3 kreuzweise eingewebt (siehe Fig. 4). Dadurch wird ein Funkensprung und ein Anziehen von Flusen und Staub verhindert, was besonders bei Arbeiten unter Reinstbedingungen und in der Nähe von empfindlichen Meßinstrumenten wichtig ist.

Die innere Lage 3 kann identisch mit der äußeren Lage 1 sein oder aber eine weniger dichte Struktur aufweisen.

Die Zwischenlage 2, welche zwischen der äußeren 1 und der inneren Lage 3 vorgesehen ist, verhindert einen direkten Kontakt dieser beiden Lagen 1 und 3, so daß ein Druckkontakt mit einer Substanz diese nicht gleichzeitig durch beide Lagen pressen kann.

Die Naht 4 der äußeren Lage 1, die Naht 5 der Zwischenlage 5 und die Naht 6 der inneren Lage sind - wie in Fig. 2 besonders hervorgehoben - jeweils gegeneinander versetzt, so daß sie weder direkt noch indirekt aufeinander zu liegen kommen und sind nicht in einem kritischen Bereich 7 angeordnet.

Als Abschluß des ärmelartigen Teils 10 ist eine elastische vorzugsweise doppelte Manschette 16 vorgesehen, welche sich formschlüssig an den entsprechenden Armbereich des Trägers anpaßt. Diese Manschette wird im Operationssaal durch Handschuhe abgedeckt.

Die Zwischenlage 2 kann in verschiedenen Ausführungsformen ausgebildet sein. Nach Fig. 3, welche einen schematischen Aufbau eines Bekleidungsstücks zeigt, ist die äußere 1 und die innere Lage 3 wie in Fig. 1 ausgebildet und die Zwischenlage 2 besteht beispielsweise aus einem gitterartigem Material 2', welches zwischen den Maschen miteinander verbundene Aufnahmevolumen 17 aufweist und aus einem nicht saugfähigem Material besteht. Die durch die äußere Lage eingedrungene Flüssigkeit kann somit von einem Aufnahmevolumen zum nächsten fließen und sich so in der Zwischenschicht 2 verteilen. Die Größe der Maschenabstände bzw. der Aufnahmevolumen 17 ist dabei vorzugsweise so ausgebildet, daß die äußere 1 und die innere Lage 3 nicht über diese Öffnungen 17 miteinander in Kontakt treten können.

Fig. 4 zeigt eine Ausführungsform wie in Fig. 3, jedoch die Zwischenschicht 2 besteht aus einem saugfähigem Material 2''. Beispielsweise kann das Material aus Polyesterfäden gewoben sein, welche jeweils aus einer Vielzahl von Filamenten bestehen. Hierdurch wird durch die geringen Abständen zwischen den einzelnen Filamenten eine Kapillarwirkung erzeugt, was eine starke absorbierende Wirkung hervorruft. Diese Wirkung kann erfindungsgemäß durch eine hydrophile Ausrüstung des Gewebes verstärkt werden.

Die Anwendung von gleichartigen chemischen Stoffen bei allen Lagen 1, 2, 3, (oben in Form von Polyester) hat den besonderen Vorteil, daß das Schrumpf- und Sterilisationsverhalten der verschiedenen Lagen 1, 2, 3 ähnlich sind.

Desweiteren sind in einem gewobenen Gewebe immer Aufnahmevolumen ausgebildet, so daß die durch die äußere Lage durchgedrungene Substanz bei entsprechender Ausbildung des Gewebes auch durch diese Volumina aufgenommen werden kann.

Nach Fig. 5, welche ebenfalls einen schematischen Aufbau eines Bekleidungsstückes zeigt, ist das Bekleidungsstück aus einer äußeren Lage 1, einer Trägerschicht 14 und einer inneren Lage 3 aufgebaut. Auf der eine gitterförmige Struktur aufweisenden Trägerschicht 14 ist zusätzlich ein impermeables Material 15, das in Form einer flüssigkeitsdichten Folie oder einer Membran vorgesehen sein kann, an einer besonders kritischen Stelle 7 des Bekleidungsstücks aufgebracht.

Nach Fig. 8 ist ein kittelartiges Bekleidungsstück 18 dargestellt, bei welchem die kritischen Stellen 7 in den Ärmelteilen 10 und im Brustbereich definiert sind.

In den Fig. 6 und 7 sind Ausführungsbeispiele von Nähten dargestellt, wobei die Bezugszahlen 8 die Nähte kennzeichnen und die Bezugszahlen 9 und 9' die zu verbindenden Stoffe definieren. Nach Fig. 6 ist das Ende des Stoffteils 9' umgeklappt, wodurch das Stoffteil 9' und das umgeklappte Ende 13 des Stoffteils 9' eine Tasche bilden. Das Ende des Stoffteils 9 ist zweifach umgeklappt, wodurch dieses Stoffteil 9 an seiner Kante aus 3 Lagen 9, 11 und 12 besteht. Die beiden Lagen 11 und 12 sind in die oben genannte Tasche eingeführt, so daß die Lagen in der Reihenfolge 9', 11, 12, 13 und 9 aufeinander liegen und zweifach bei 8' und 8'' zusammengenäht sind. Das Ausführungsbeispiel nach Fig. 7 stellt eine vereinfachte Ausführungsform gegenüber Fig. 6 dar, da das Ende des Stoffteils 9 nur einmal umgeklappt ist. Somit liegen auf der Nahtstelle nur 4 Lagen des Stoffes aufeinander.

Bekannt sind auch Ausführungsformen von Nähten, bei denen der Stichfaden die gesamte Naht nicht vollständig durchdringt. So kann beispielsweise in Fig. 6 die Naht so abgeändert werden, daß vor dem Zusammennähen das Stoffteil 9'' hochgeklappt ist und somit nur die Teile 9, 13, 12 und 11 vernäht werden. Ist das Stoffteil 9'' über die Naht geklappt, so ist die Nahtstelle von außen nicht zugänglich.

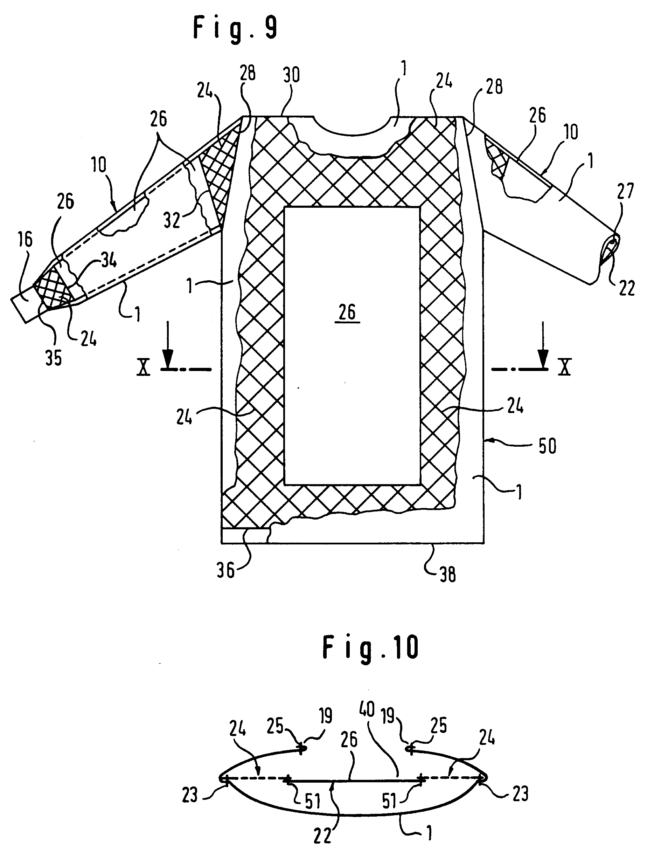

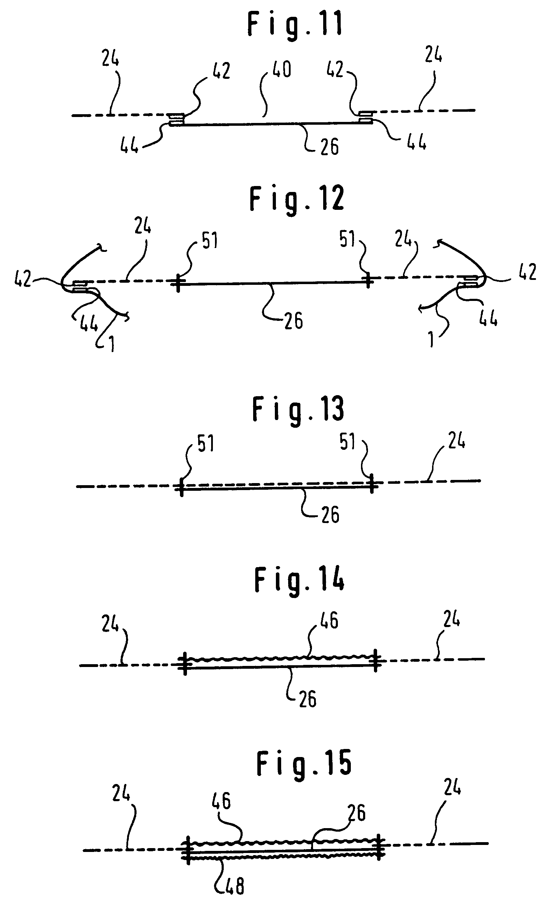

Beim Betrachten der Fig. 9 und 10 kann ein Bekleidungsstück gemäß einer alternativen Ausführungsform der vorliegenden Erfindung gesehen werden. In der folgenden Beschreibung werden die gleichen Bezugszeichen zum Beschreiben der Teile benutzt, die in den vorhergehend beschriebenen Ausführungsformen entsprechende Gegenstücke haben, und neue Bezugsziffern werden für Merkmale benutzt, welche von denjenigen der vorhergehenden Ausführungsformen abweichen. Wo gemeinsame Bezugszeichen benutzt werden, bestehen die Materialien der Ausführungsformen nach den Figuren 9 und 10 und der nachfolgenden Varianten der Figuren 11 bis 15 aus den gleichen Materialien, die für Elemente mit dem gleichen Bezugszeichen in Verbindung mit den vorgenannten Figuren beschrieben waren.

Insbesondere zeigen die Figuren 9 und 10 wieder einen Operationskittel mit einem Körperteil 20 und zwei Ärmel 10, wobei der Ärmel 10 der linken Seite (auf der rechten Seite der Zeichnung) nur teilweise gezeigt ist, um die interne Konstruktion aufzuzeigen. In der Figur 9 ist die äußere Lage des Bekleidungsstücks an der Frontseite für ein besseres Verständnis der internen Konstruktion abgetrennt.

Wie aus den Figuren 9 und 10 ersehen werden kann, insbesondere aus Fig. 10, weist das Bekleidungsstück oder der Kittel im wesentlichen eine äußere Lage 1 auf, die sich um den ganzen Vorderbereich des Kittels zu zwei vertikalen Nähten 19 am Rücken erstreckt, die - in der üblichen Weise bei Operationskittel - durch Bänder oder Riemen um den Rücken des Trägers zusammengezogen sind. Das gleiche Material wie bei der äußeren Lage 1 ist für die äußeren Lagen der Ärmel vorgesehen, einschließlich der mit Kreuzschraffur dargestellten Schulterbereiche. Innerhalb der äußeren Lage 1 ist im vorderen Bereich des Bekleidungsstücks eine innere Lage 22 vorgesehen, welche eigentlich eine zusammengesetzte Lage mit einem Trägermaterial in Form eines Netzteils 24 und einer folienartigen Membran 26 ist. Wie angedeutet in Fig. 9, welche keine absolut akkurate technische Zeichnung darstellt, sondern einen künstlerischen Einschlag aufweist, ist die Membran 26 im wesentlichen rechteckig und an allen vier Seiten von einem Netz 24 umgeben. Die Zeichnung der Fig. 9 wird eigentlich mit einer großflächig weggebrochenen Frontlage 1 gezeigt, so daß das netzartige Trägermaterial oder -gewebe 24 und die Membran 26 leicht gesehen werden können. Eigentlich wird der gesamte Vorderbereich des Bekleidungsstücks durch die äußere Lage 1 bedeckt. Im Rückenbereich umfaßt das Bekleidungsstück nur die äußere Lage 1, und in diesem Bereich ist keine innere Lage vorhanden, da sie dort nicht notwendig ist. Zusammengenähte Nähte werden durch kurze vertikale Linien und die Bezugsziffern 21, 23 und 25 angedeutet.

Der Ärmel 10 weist ebenfalls eine Dualstruktur mit einer äußeren Lage 1 und einer inneren Lage 22 auf, wobei die innere Lage eine Membran umfaßt, in diesem Fall eine ärmelartige rohrförmige Membran 26 (typischerweise durch Rollen einer planen Membran in einen konischen Zylinder und Bilden einer Naht 27 an dem Punkt wo die longitudinalen Kanten aufeinandertreffen) und wobei der zylindrische Ärmel an der Schulternaht 28 des äußeren Ärmelmaterials 1 mit dem Schulterteil 30 der äußeren Lage des Kittels über ein netzartiges Trägermaterial 24 verbunden ist. Wie vom rechten Ärmel des Kittels aus Fig. 9 ersichtlich ist (linke Seite der Zeichnung) ist das Handgelenk der inneren blattförmigen Membran 26 auch mit der Manschette 16 über ein netzartiges Material 24 verbunden. Der netzartige Einsatz 24 an jedem Schulterbereich des Kittels ist also über eine erste Naht 28 mit den Schultern des Körpers des Kittels und über eine zweite Naht 32 mit den Schulterenden der blattförmigen inneren Membran 26 verbunden. Das handgelenkseitige Ende der blattförmigen inneren Membran 26 ist über eine Naht 34 mit dem netzartigen Einsatz 24 verbunden und das andere Ende dieses netzartigen Einsatzes wird dann durch eine weitere Naht 35 mit dem Inneren einer doppelten Manschette 16 verbunden, beispielsweise durch eine Naht mit der inneren Kante oder durch eine Klebbefestigung mit der inneren Seite des U-förmigen Raums, der durch die doppelte Manschette gebildet ist, wobei die Öffnung des U-förmigen Raumes in Richtung der Schulter ausgerichtet ist.

An der Basis des Kittels ist die innere Lage 1 nach innen umgeschlagen, so daß ihre obere Kante, die auf sich selbst umgeschlagen sein kann, höher liegt, als die eigentliche untere Kante 38 des Kittels. Somit wird ein U-förmiger Kanal gebildet, der alle Flüssigkeit sammeln kann, die letztendlich von der Frontmembran 26 nach unten tropfen kann. Es sollte angemerkt werden, daß dieser Kanal nicht erfindungswesentlich ist und es kann auch vorgezogen werden, die Bodenkante des Kittels einfach offen zu lassen, so daß jede Flüssigkeit die durch den Kittel dringt, oder Schweiß, der vom Arzt oder Träger stammt, einfach nach unten auf den Boden des Operationssaals entweichen kann.

Verschiedene Abänderungen werden in den weiteren Figuren 11 bis 15 gezeigt. In Fig. 11 ist das netzartige Trägermaterial 24 im Frontbereich des Kittels ebenfalls mit einer Öffnung 40 versehen (wie in den Ausführungsformen nach den Figuren 9 und 10), die nur geringfügig kleiner ist als die Membran 26. In dieser Ausführungsform ist die Membran jedoch entfernbar mit dem netzartigen Trägermaterial 24 verbunden, wobei das Entfernen über ein "Velcro"-artigen Befestigungselement (z.B. Klettverschluß), d.h. Verbindungsbänder 42 und 44 eines Materials die an dem netzartigen Trägermaterial bzw. an die Membran 26 angenäht sind (oder zu dieser klebebefestigt), und die aus bekannten ineinandergreifenden Schleifen und Haken bestehen. Die durch die Vernähung in der Ausführungsform der Fig. 10 bewirkte permanente Verbindung wird, wie durch die kurzen vertikalen Linien 21 illustriert ist, hierbei durch eine lösbare Verbindung ersetzt.

Die Fig. 12 zeigt eine weitere ähnliche Ausführungsform, in welcher die ganze innere Lage, welche die netzartige Trägerschicht 24 und die an diese genähte Membran 26 umfaßt, von der äußeren Lage 1, welche nur teilweise zur Vereinfachung der Illustration gezeigt ist, entfernbar ist. Wieder geschieht die Verbindung durch Bänder von "Velcro"-artigem Material 42, 44, die mit der inneren Lage und der äußeren Lage 1 vernäht sind.

Fig. 13 zeigt eine weitere mögliche Ausführungsform, in der das netzartige Material 24 eine kontinuierliche Lage bildet und die Membran 26 einfach an den Kanten auf diese Lage genäht ist. Alternativ könnte sie auf die netzartige Lage 24 geklebt werden.

In Fig. 14 umfaßt die Membran eine zusammengesetzte Membran in der Form einer Folie 26, die sowohl für Flüssigkeit als auch für Wasserdampf undurchlässig ist und eine Stützlage 46, die an der von der äußeren Lage abgewandten Fläche der Membran 26 vorgesehen ist und die aus einem mit offenen Maschen gewobenen oder nicht gewobenen Gewebe bestehen kann. Die Idee dieser Lage ist einfach, einen weiteren Tragekomfort zu schaffen und bestimmte Transpirationsabsaugmaßnahmen vorzusehen und genauso die Abnutzungs- und Knickbildungseigenschaft einer (leichtgewichtigen) Folienmembran zu verbessern. In einer alternativen Version dieser Ausführungsform, die nicht dargestellt ist, kann die Folie 26 eine Plastikfolie sein, die sowohl für Flüssigkeiten als auch für Wasserdampf völlig undurchdringlich ist. Folien mit diesen Eigenschaften und auch Folien die flüssigkeitsundurchlässig aber dampfdurchlässig sind, sind an sich bekannt.

Schließlich zeigt Fig. 15 eine Ausführungsform ähnlich zu der von Fig. 14 aber mit einer zusätzlichen, saugfähigen Lage 48, die an der Fläche der Membran 26 vorgesehen ist, die die äußere Lage 1 stützt (nicht dargestellt, aber aus allen Figuren 13, 14 und 15 verständlich, daß sie unterhalb der illustrierten Lagestruktur liegt). Der Zweck dieser Lage ist einfach jede Flüssigkeit, die die erste Lage 1 durchdringt, so zu verteilen, daß sie nicht von der inneren Membran 26 abläuft, sondern statt dessen in dem saugfähigen Material aufgenommen wird. Eine solche Lage kann auch in all den vorgenannt beschriebenen Ausführungsformen verwendet werden.

Es ist verständlich, daß das netzartige Trägermaterial 24 in einer Vielzahl von Formen entweder als wirkliches Netz mit Maschen oder als ein offenes Maschengewebe oder tatsächlich als ein dichteres Maschengewebe mit einer Vielzahl von darin gebildeten Öffnungen vorgesehen ist. In all diesen Fällen gestattet die offene Struktur des Gewebes in einfacher Weise einen Luftfluß durch dieses und vereinfacht Luftzirkulation und -konvektion, welche das Bekleidungsstück selbst für den Träger komfortabler macht. Zusätzlich erzeugen Bewegungen des Benutzers Änderungen der relativen Positionen der Membran und der ersten Lage 1, wodurch der Raum zwischen ihnen geöffnet und geschlossen wird, und zumindest lokal wird dies eine pumpenartige Wirkung erzeugen, welche auf einfache Weise eine Ventilation des Bekleidungsstücks sicherstellt. Weiterhin werden die Sterilisations- und Waschfähigkeit verbessert.

## Patentansprüche

1. Bekleidungsstück, insbesondere für den medizinischen oder chemischen Bereich zum Schutz vor Flüssigkeiten und/oder Mikroorganismen, welches zumindest teilweise aus inneren und äußeren Lagen besteht,
dadurch **gekennzeichnet,**
daß die äußere Lage (1) aus einem eine Flüssigkeit- und Mikroorganismenbarriere bildenden hydrophoben Gewebe gebildet ist, und daß die innere Lage (22) wenigstens ein Trägermaterial (24) mit einer netzartigen, mit Öffnungen oder offenen Maschen versehenen Struktur aufweist, die an zumindest einer nicht kritischen Stelle an der äußeren Lage befestigt oder befestigbar ist, bei der die Gefahr eines Durchtritts der Flüssigkeiten und/oder Mikroorganismen durch diese äußere Lage gering ist, und daß wenigstens eine Membran (26) am Trägermaterial (24) an zumindest einer kritischen Stelle befestigt ist, an der die Gefahr eines Durchtritts der Flüssigkeit und/oder Mikroorganismuses durch die äußere Lage besteht.

2. Bekleidungsstück nach Anspruch 1,
dadurch gekennzeichnet, daß das hydrophobe Gewebe aus einem dichtgewebten Gewebe besteht.

3. Bekleidungsstück nach Anspruch 1 oder 2, bei dem das Trägermaterial am Bekleidungsstück an einer oder mehreren der folgenden Nähte befestigt ist: einer Seitennaht, einer Rückennaht, einer Schulternaht oder einer Manschettennaht.

4. Bekleidungsstück nach einem der Ansprüche 1 bis 3,
dadurch gekennzeichnet, daß das Trägermaterial (24) sich hinter der Membran (26) auf der von der äußeren Lage (1) abgewandten Fläche der Membran erstreckt.

5. Bekleidungsstück nach einem der Ansprüche 1 bis 4,
dadurch gekennzeichnet, daß das Trägermaterial (24) eine Öffnung (40) umfaßt, in der die Membran (26) angeordnet ist.

6. Bekleidungsstück nach einem der Ansprüche 1 bis 5,
bei dem die Membran (26) aus einem im wesentlichen planaren, blattförmigen Tuchmaterial besteht, das an Brust- und Bauchbereichen des Kittels angeordnet ist.

7. Bekleidungsstück nach einem der Ansprüche 1 bis 5,
bei dem die Membran (26) eine rohrförmige Struktur aufweist, die in wenigstens einem Ärmel (10) eines Kittels angeordnet ist und am Kittel durch das Trägermaterial (24) an wenigstens einem der Manschetten- und Schulterbereiche befestigt ist.

8. Bekleidungsstück nach einem der Ansprüche 1 bis 7,
dadurch gekennzeichnet, daß die oder jede Membran (26) entfernbar innerhalb des Bekleidungsstücks entweder durch lösbare Befestigungsmittel (42, 44), die die Membran (26) mit dem Trägermaterial oder die das Trägermaterial (24) mit der äußeren Lage (1) verbinden, befestigt ist.

9. Bekleidungsstück nach einem der Ansprüche 1 bis 8,
dadurch gekennzeichnet, daß die oder jede Membran ein hydrophobes oder hydrophiles, flüssigkeitsundurchlässiges aber wasserdampfdurchlässiges Gewebe umfaßt.

10. Bekleidungsstück nach einem der Ansprüche 1 bis 5,
dadurch gekennzeichnet, daß die oder jede Membran eine flüssigkeitsundurchlässige aber wasserdampfdurchlässig Folie umfaßt.

11. Bekleidungsstück nach einem der Ansprüche 1 bis 10,
dadurch gekennzeichnet, daß die Membran eine zusammengesetzte Membran ist, die wenigstens erste und zweite Lagen aufweist, wobei die erste Lage benachbart der äußeren Lage und die zweite Lage an einer von der äußeren Lage abgewandten Fläche der ersten Lage angeordnet ist, und wobei die ersten und zweiten Lagen eines der folgenden Materialpaare umfassen:
a) eine flüssigkeits- und wasserdampfundurchlässige Folie (26) als erste Lage und ein mit offenen Maschen gewobenes oder nicht gewobenes Gewebe als zweite Lage (46), wobei eine saugfähige Lage (48) wahlweise an zumindest einer Fläche der ersten Lage (1) vorgesehen ist,
b) eine flüssigkeitsundurchlässige aber wasserdampfdurchlässige folienartige Membran (26) als erste Lage und ein mit offenen Maschen gewobenes oder nicht gewobenes Gewebe als zweite Lage (46), wobei eine saugfähige Lage (48) wahlweise an wenigstens einer Fläche der ersten Lage (1) vorgesehen ist.

12. Bekleidungsstück nach einem der Ansprüche 1 bis 11,
dadurch gekennzeichnet, daß die Membran und das Trägermaterial ein Laminat bilden.

13. Bekleidungsstück nach einem der Ansprüche 1 bis 12,
dadurch gekennzeichnet, daß das Trägermaterial (24) ein elastisch dehnbares Material umfaßt.

## Claims

1. Article of clothing, in particular for the medical or chemical field for protection against liquids and/or micro-organisms, the article of clothing comprising inner and outer layers, at least in part, characterised in that the outer layer (1) is formed of a hydrophobic fabric which forms a liquid barrier and a micro-organism barrier, and in that the inner layer (22) comprises at least one carrier material (24) having a net-like structure provided with apertures or open meshes and secured or securable to the outer layer at at least one non-critical position at which the danger of passage of liquids and/or micro-organisms through that outer layer is low, and in that at least one membrane (26) is secured to the carrier material (24) at at least one critical position at which the danger exists of the passage of liquid and/or micro-organisms through the outer layer.

2. Article of clothing in accordance with claim 1, characterised in that said hydrophobic fabric comprises a tightly woven fabric.

3. Article of clothing in accordance with claim 1 or claim 2, wherein the carrier material is secured to said article of clothing at one or more of the following seams: a side seam, a back seam, a shoulder seam or a cuff seam.

4. Article of clothing in accordance with one of the claims 1 to 3, characterised in that the carrier material (24) extends behind the membrane (26) on the face of the membrane remote from the outer layer (1).

5. Article of clothing in accordance with one of the claims 1 to 4, characterised in that the carrier material (24) comprises an opening (40) in which the membrane (26) is arranged.

6. Article of clothing in accordance with one of the claims 1 to 5, in which the membrane (26) comprises an essentially planar, sheet-like cloth material disposed at the chest and abdomen regions of the gown.

7. Article of clothing in accordance with one of the claims 1 to 5, in which the membrane (26) comprises a tubular structure disposed in at least one sleeve (10) of a gown and secured to the gown by the carrier material (24) at at least one of the cuff and shoulder regions thereof.

8. Article of clothing in accordance with one of the claims 1 to 7, characterised in that the or each membrane (26) is removably secured within the article of clothing, either by releasable securing means (42, 44) which connect the membrane (26) to the carrier material or by releasable securing means (42, 44) which connect the carrier material (24) to the outer layer (1).

9. Article of clothing in accordance with one of the claims 1 to 8, characterised in that the or each membrane comprises a hydrophobic or hydrophilic, liquid impermeable but water vapour permeable fabric.

10. Article of clothing in accordance with one of the claims 1 to 5, characterised in that the or each membrane comprises a liquid impermeable but water vapour permeable foil.

11. Article of clothing in accordance with one of the claims 1 to 10, characterised in that the membrane is a composite membrane having at least first and second layers, with the first layer disposed adjacent the outer layer and the second layer disposed on a face of said first layer remote from said outer layer, and wherein the first and second layers comprise one of the following material pairs:
a) a liquid and water vapour impermeable foil (26) as a first layer and an open mesh woven or non-woven fabric as a second layer (46), with an absorbent layer (48) optionally being provided on at least one face of said first layer (1),
b) a liquid impermeable but water vapour permeable foil-like membrane (26) as a first layer and an open mesh woven or non-woven fabric as a second layer (46), with an absorbent layer (48) optionally being provided on at least one face of said first layer (1).

12. Article of clothing in accordance with claim 1, characterised in that the membrane and the carrier material form a laminate.

13. Article of clothing in accordance with claim 1, characterised in that the carrier material (24) comprises a resilient extensible material.

## Revendications

1. Vêtement de protection contre les liquides et/ou les micro-organismes, en particulier pour le domaine de la médecine ou de la chimie, lequel est constitué au moins partiellement de couches intérieures et extérieures,
caractérisé en ce que la couche extérieure (1) est constituée par un tissu hydrophobe formant une barrière aux liquides et une barrière aux micro-organismes, et en ce que la couche intérieure (22) comprend au moins un matériau de support (24) présentant une structure en forme de treillis avec des orifices ou des mailles ouvertes, laquelle couche est fixée ou peut être fixée contre au moins une zone non critique de la couche extérieure, où le risque de passage des liquides et/ou des micro-organismes est faible, et en ce qu'au moins une membrane (26) est fixée contre le matériau de support (24), au moins dans une zone critique, où les liquides et/ou les micro-organismes risquent de traverser la couche extérieure.

2. Vêtement selon la revendication 1, caractérisé en ce que le tissu hydrophobe est constitué par un tissu avec une contexture serrée.

3. Vêtement selon la revendication 1 ou 2, dans lequel le matériau de support est fixé contre le vêtement par l'une ou plusieurs des coutures suivantes : une couture latérale, une couture de dos, une couture aux épaules ou une couture aux poignets.

4. Vêtement selon l'une quelconque des revendications 1 à 3, caractérisé en ce que le matériau de support (24) est posé derrière la membrane (26), sur la face de la membrane opposée à la couche extérieure (1).

5. Vêtement selon l'une quelconque des revendications 1 à 4, caractérisé en ce que le matériau de support (24) comprend une ouverture (40), dans laquelle est posée la membrane (26).

6. Vêtement selon l'une quelconque des revendications 1 à 5, dans lequel la membrane (26) est constituée par une étoffe en forme de feuille, sensiblement plane, qui est posée dans les zones de la poitrine et du ventre de la blouse.

7. Vêtement selon l'une quelconque des revendications 1 à 5, dans lequel la membrane (26) présente une structure cylindrique, qui est posée au moins dans une manche (10) d'une blouse et fixée à la blouse par l'intermédiaire du matériau de support (24) contre au moins l'une des zones du poignet ou de l'épaule.

8. Vêtement selon l'une quelconque des revendications 1 à 7, caractérisé en ce que la membrane ou chaque membrane (26) peut être fixée de manière amovible à l'intérieur du vêtement par des moyens de fixation détachables (42, 44), qui relient soit la membrane (26) avec le matériau de support, soit le matériau de support (24) avec la couche extérieure (1).

9. Vêtement selon l'une quelconque des revendications 1 à 8, caractérisé en ce que la membrane ou chaque membrane est constituée par un tissu hydrophobe ou hydrophile, imperméable aux liquides, mais perméable à la vapeur d'eau.

10. Vêtement selon l'une quelconque des revendications 1 à 5, caractérisé en ce que la membrane ou chaque membrane est constituée par une feuille imperméable aux liquides, mais perméable à la vapeur d'eau.

11. Vêtement selon l'une quelconque des revendications 1 à 10, caractérisé en ce que la membrane est une membrane composite, qui comprend au moins une première couche et une deuxième couche, dans laquelle la première couche est contiguë à la couche extérieure et la deuxième couche est contiguë à la face de la première couche opposée à la couche extérieure, et dans laquelle la première couche et la deuxième couche sont constituées par l'une des paires de matériaux suivants :
a) une feuille (26) imperméable aux liquides et à la vapeur d'eau formant la première couche et une étoffe avec des mailles ouvertes, tissée ou non tissée, formant la deuxième couche (46), une couche absorbante (48) étant prévue au choix au moins contre l'une des faces de la première couche (1),
b) une membrane (26) en forme de feuille imperméable aux liquides mais perméable à la vapeur d'eau formant la première couche et une étoffe avec des mailles ouvertes, tissée ou non tissée, formant la deuxième couche (46), une couche absorbante (48) étant prévue au choix au moins contre l'une des faces de la première couche (1).

12. Vêtement selon l'une quelconque des revendications 1 à 11, caractérisé en ce que la membrane et le matériau de support forment une matière stratifiée.

13. Vêtement selon l'une quelconque des revendications 1 à 12, caractérisé en ce que le matériau de support (24) est constitué par un matériau élastique extensible.
